# EUROPEAN PATENT SPECIFICATION

(11) **EP 3 848 862 B1**
(45) Date of publication and mention of the grant of the patent: **25.11.2026**
(21) Application number: 20213068.8
(22) Date of filing: 10.12.2020
(51) Int. Cl.: G06Q 10/00

(54) **METHOD AND APPARATUS FOR MANAGING INFORMATION ABOUT MEASUREMENT DEVICE**
VERFAHREN UND VORRICHTUNG ZUR VERWALTUNG VON INFORMATIONEN ÜBER EINE MESSVORRICHTUNG
PROCÉDÉ ET APPAREIL DE GESTION DES INFORMATIONS RELATIVES À UN DISPOSITIF DE MESURE

(30) Priority: 13.01.2020 CN 202010033659
(43) Date of publication of application: 14.07.2021
(73) Proprietor: Mettler-Toledo (Changzhou) Precision Instruments Co., Ltd, Changzhou Jiangsu 213022 (CN); Mettler-Toledo (Changzhou) Measurement Technology Co., Ltd, Changzhou Jiangsu 213125 (CN); Mettler-Toledo International Trading (Shanghai) Co., Ltd, Shanghai Shanghai 200131 (CN)
(72) Inventor: Duan, Qian Ni, Changzhou, Jiangsu 213000 (CN); Xie, Gua Jun, Changzhou, Jiangsu 213000 (CN); EMERY, Jean-Christophe, Changzhou, Jiangsu 213000 (CN); Dai, Feng, Changzhou, Jiangsu 213000 (CN)
(74) Representative: Mettler-Toledo

(56) References cited:
- US-A1- 2017 287 090
- US-A1- 2018 007 131

## Description

### Technical Field

The invention relates to a method and apparatus for managing information about a measurement device as set out in the appended set of claims.

### Background Art

Measurement devices or apparatuses have a wide range of applications in various industries. During their life cycle of production, logistics, installation, usage and maintenance, various device state information may be generated, and the various device state information may be of vital significance for the proper and normal use of the measurement devices. Currently, security for the storage and management of such information is insufficient and thus at the risk of abnormal information modification, and the application of the information is not enough.

Current methods for storing and managing various state information about a measurement device generally include decentralized physical storage information management and database or cloud storage-based information management. With a method of decentralized physical storage information management, information retrieval and multi-functional information application cannot be performed efficiently, and the information may be lost due to failure of a storage device; and with the database or cloud storage-based information management, the efficiency of information retrieval and application is improved; however, the security of information management remains insufficient.

With the existing methods for managing information about measurement devices, which are based on the blockchains, all relevant parties, such as the manufacturer, the logistics company, the user and the maintainer of the measurement device, in a life cycle of a measurement device are required to be deployed in the same blockchain, making it difficult to guarantee the privacy and security protection for the information uploaded by each relevant party, and in addition, because there is too much deposited device state information data, the physical configuration requirements for the node devices of each relevant party are increased. A method for managing information using blockchain structures is disclosed, e.g., in US 2017/0287090 A1. US 2018/0007131 A1 relates to device self-servicing in an autonomous decentralized peer-to-peer telemetry environment, wherein interconnection between peers may be created by using blockchain technologies.

### Summary of invention

In view of this, the invention provides a method and apparatus for managing information about a measurement device, a computer device and a computer readable storage medium as set out in the appended set of claims.

In order to achieve the above object, according to a first aspect of the invention, there is provided a method for managing information about a measurement device, which is applied to a network system including a plurality of blockchains, the network system comprising data sender node devices and data manager node devices, wherein the data sender node devices are node devices for a first blockchain, and the data manager node devices are node devices for a second blockchain; the first blockchain storing a target depository transaction, sent by the data sender node devices, that comprises device state information about the measurement device; the method being executed by a node device of the first blockchain, and comprising:
receiving a cross-chain management request from the data manager node devices for the device state information about the measurement device stored in the first blockchain; and
verifying, in response to the cross-chain management request, whether the data manager has a management authority over the device state information about the measurement device; and
if yes, obtaining the target depository transaction, and performing management of the device state information about the measurement device based on the target depository transaction.

In an illustrated embodiment, the cross-chain management request is a request for obtaining the device state information about the measurement device across chains; and
said performing management of the device state information about the measurement device comprises:
sending the device state information about the measurement device to the data manager node devices across chains.

In yet another illustrated embodiment, the first blockchain is deployed with a smart contract for managing the device state information, and a processing logic corresponding to the contract code of the smart contract comprises a management authority verification logic; and said verifying, in response to the cross-chain access request, whether the data manager has a management authority over the device state information about the measurement device comprises:
invoking, in response to the cross-chain access request, the management authority verification logic in the smart contract to verify whether the data manager has the management authority over the device state information about the measurement device.

In yet another illustrated embodiment, the processing logic corresponding to the contract code of the smart contract further comprises a management logic for the device state information; and said obtaining the target depository transaction, and performing management of the device state information about the measurement device based on the target depository transaction comprises:
further invoking, after verifying that the data manager has the management authority over the device state information about the measurement device, the management logic in the smart contract for the device state information, obtain the target depository transaction, and perform management of the device state information about the measurement device based on the target depository transaction.

In yet another illustrated embodiment, the first blockchain and the second blockchain are different sub-chains belonging to the same alliance chain.

In yet another illustrated embodiment, said receiving a cross-chain access request from the data manager node devices for the device state information about the measurement device stored in the first blockchain comprises:
receiving, via a cross-chain relay device, a cross-chain access request from the data manager node devices for the device state information about the measurement device stored in the first blockchain.

In yet another illustrated embodiment, the data sender node devices comprise one or more of a production recording node device of the measurement device, or an initial calibration node device, or a measurement authentication institute node device, or a logistics agency node device, a user node device, or a maintainer node device;
the target depository transaction comprises a unique identification code corresponding to the measurement device; and the device state information comprises one or more of raw material information, production process information, initial calibration information, quality certification information, logistics circulation information, a device replicating parameter, abnormal state information, measurement data record information, maintenance record information, or electronic contract information related to the measurement device.

In yet another illustrated embodiment, the target depository transaction comprises the latest electronic lead-sealing code of the measurement device; the cross-chain management request comprises an existing lead-sealing identification code of the measurement device; and the management logic for the device state information that is comprised by the processing logic corresponding to the contract code of the smart contract comprises:
step A, obtaining the target depository transaction;
step B, determining, based on the target depository transaction, whether the latest lead-sealing identification code and the existing lead-sealing identification code are the same; and
step C, sending, if the latest lead-sealing identification code is different from the existing lead-sealing identification code, a preset prompt or alarm operation to the data manager node devices across chains.

In yet another illustrated embodiment, the target depository transaction comprises the latest calibration information about the measurement device; the cross-chain management request comprises existing calibration information about the measurement device; and the management logic for the device state information that is comprised by the processing logic corresponding to the contract code of the smart contract comprises:
step A, obtaining the target depository transaction;
step B, determining, based on the target depository transaction, whether the latest calibration information and the existing calibration information are the same; and
step C, sending, if the latest calibration information is different from the existing calibration information, the latest calibration information to the data manager node devices across chains, so that the data manager node devices can calibrate the measurement device based on the latest calibration information.

In yet another illustrated embodiment, the target depository transaction comprises the latest software program corresponding to the measurement device and the version number of the latest software program; the data manager node device is the measurement device; the cross-chain management request comprises the version number of a current software program of the measurement device; and the management logic for the device state information that is comprised by the processing logic corresponding to the contract code of the smart contract comprises:
step A, obtaining the target depository transaction;
step B, comparing, based on the target depository transaction, whether the version number of the latest software program and the version number of the current software program differ by a preset level; and
step C, if yes, sending the latest software program to the measurement device across chains, so that the measurement device performs upgrading of the software version.

In yet another illustrated embodiment, the target depository transaction comprises first measurement result information about the measurement device; the cross-chain management request comprises second measurement result information about the measurement device; and the management logic for the device measurement information that is comprised by the processing logic corresponding to the contract code of the smart contract comprises:
step A, obtaining the target depository transaction;
step B, comparing, based on the target depository transaction, whether the first measurement result information and the second measurement result information are the same; and
step C, sending, if the first measurement result information is different from the second measurement result information, the first measurement result information or a preset prompt or alarm operation to the data manager node devices across chains.

In yet another illustrated embodiment, the target depository transaction comprises first device operation information about the measurement device; the cross-chain management request comprises second device operation information about the measurement device; and the management logic for the device operation information that is comprised by the processing logic corresponding to the contract code of the smart contract comprises:
step A, obtaining the target depository transaction;
step B, comparing, based on the target depository transaction, whether the first device operation information and the second device operation information are the same; and
step C, sending, if the first device operation information is different from the second device operation information, the first device operation information or a preset prompt or alarm operation to the data manager node devices across chains.

According to a second aspect of the present invention, there is provided an apparatus for managing information about a measurement device, which is applied to a network system including a plurality of blockchains, the network system comprising data sender node devices and data manager node devices, wherein the data sender node devices are node devices for a first blockchain, and the data manager node devices are node devices for a second blockchain; the first blockchain storing a target depository transaction, sent by the data sender node devices, that comprises device state information about the measurement device; the apparatus being applied at a node device of the first blockchain, and comprising:
a receiving unit for receiving a cross-chain management request from the data manager node devices for the device state information about the measurement device stored in the first blockchain; and
a verification unit for verifying, in response to the cross-chain management request, whether the data manager has a management authority over the device state information about the measurement device; and
an execution unit for obtaining the target depository transaction, and performing management of the device state information about the measurement device based on the target depository transaction.

In yet another illustrated embodiment, the cross-chain management request is a request for obtaining the device state information about the measurement device across chains; and the execution unit is further configured to:
obtain the target depository transaction, and send the device state information about the measurement device to the data manager node devices across chains.

In yet another illustrated embodiment, the first blockchain is deployed with a smart contract for managing the device state information, and a processing logic corresponding to the contract code of the smart contract comprises a management authority verification logic; and the verification unit is further configured to:
invoke, in response to the cross-chain access request, the management authority verification logic in the smart contract to verify whether the data manager has the management authority over the device state information about the measurement device.

In yet another illustrated embodiment, the processing logic corresponding to the contract code of the smart contract further comprises a management logic for the device state information; and the execution unit is further configured to:
further invoke, after verifying that the data manager has the management authority over the device state information about the measurement device, the management logic in the smart contract for the device state information, obtain the target depository transaction, and perform management of the device state information about the measurement device based on the target depository transaction.

In yet another illustrated embodiment, the first blockchain and the second blockchain are different sub-chains belonging to the same alliance chain.

In yet another illustrated embodiment, the receiving unit is further configured to: receive, via a cross-chain relay device, a cross-chain access request from the data manager node devices for the device state information about the measurement device stored in the first blockchain.

In yet another illustrated embodiment, the data sender node devices comprise one or more of a production recording node device of the measurement device, or an initial calibration node device, or a measurement authentication institute node device, or a logistics agency node device, a user node device, or a maintainer node device;
the target depository transaction comprises a unique identification code corresponding to the measurement device; and the device state information comprises one or more of raw material information, production process information, initial calibration information, quality certification information, logistics circulation information, a device replicating parameter, abnormal state information, measurement data record information, maintenance record information, or electronic contract information related to the measurement device.

In yet another illustrated embodiment, the target depository transaction comprises the latest electronic lead-sealing code of the measurement device; the cross-chain management request comprises an existing lead-sealing identification code of the measurement device; and the management logic for the device state information that is comprised by the processing logic corresponding to the contract code of the smart contract comprises:
step A, obtaining the target depository transaction;
step B, determining, based on the target depository transaction, whether the latest lead-sealing identification code and the existing lead-sealing identification code are the same; and
step C, sending, if the latest lead-sealing identification code is different from the existing lead-sealing identification code, a preset prompt or alarm operation to the data manager node devices across chains.

In yet another illustrated embodiment, the target depository transaction comprises the latest calibration information about the measurement device; the cross-chain management request comprises existing calibration information about the measurement device; and the management logic for the device state information that is comprised by the processing logic corresponding to the contract code of the smart contract comprises:
step A, obtaining the target depository transaction;
step B, determining, based on the target depository transaction, whether the latest calibration information and the existing calibration information are the same; and
step C, sending, if the latest calibration information is different from the existing calibration information, the latest calibration information to the data manager node devices across chains, so that the data manager node devices can calibrate the measurement device based on the latest calibration information.

In yet another illustrated embodiment, the target depository transaction comprises the latest software program corresponding to the measurement device and the version number of the latest software program; the data manager node device is the measurement device; the cross-chain management request comprises the version number of a current software program of the measurement device; and the management logic for the device state information that is comprised by the processing logic corresponding to the contract code of the smart contract comprises:
step A, obtaining the target depository transaction;
step B, comparing, based on the target depository transaction, whether the version number of the latest software program and the version number of the current software program differ by a preset level; and
step C, if yes, sending the latest software program to the measurement device across chains, so that the measurement device performs upgrading of the software version.

In yet another illustrated embodiment, the target depository transaction comprises first measurement result information about the measurement device; the cross-chain management request comprises second measurement result information about the measurement device; and the management logic for the device measurement information that is comprised by the processing logic corresponding to the contract code of the smart contract comprises:
step A, obtaining the target depository transaction;
step B, comparing, based on the target depository transaction, whether the first measurement result information and the second measurement result information are the same; and
step C, sending, if the first measurement result information is different from the second measurement result information, the first measurement result information or a preset prompt or alarm operation to the data manager node devices across chains.

In yet another illustrated embodiment, the target depository transaction comprises first device operation information about the measurement device; the cross-chain management request comprises second device operation information about the measurement device; and the management logic for the device operation information that is comprised by the processing logic corresponding to the contract code of the smart contract comprises:
step A, obtaining the target depository transaction;
step B, comparing, based on the target depository transaction, whether the first device operation information and the second device operation information are the same; and
step C, sending, if the first device operation information is different from the second device operation information, the first device operation information or a preset prompt or alarm operation to the data manager node devices across chains.

According to a third aspect of the present invention, there is provided a computer device, comprising: a memory and a processor, wherein the memory has stored thereon a computer program executable by the processor that, when executed by the processor, causes the implementation of the method for managing information about a measurement device as described in the above embodiments.

According to a fourth aspect of the present invention, there is provided a computer readable storage medium having stored thereon a computer program that, when executed by a processor, causes the implementation of the method for managing information about a measurement device as described in the embodiments.

It can be seen from the technical solutions that with the method and apparatus for managing information about a measurement device provided in this specification, the device state information about the measurement device is stored into the blockchain in a decentralized manner to prevent tampering, in addition, the access to or management of device state information based on a cross-chain information interaction technique for a plurality of blockchains further increases the privacy and security of device state information data and reduces the physical configuration requirements for the node devices on each blockchain.

### Brief description of drawings

- Fig. 1: is a schematic flow diagram of a method for managing information about a measurement device according to an exemplary embodiment;
- Fig. 2: is a schematic flow diagram of a method for managing calibration information about a measurement device according to yet another exemplary embodiment;
- Fig. 3: is a schematic flow diagram of a method for managing an electronic lead-sealing state of a measurement device according to yet another exemplary embodiment;
- Fig. 4: is a schematic flow diagram of a method for managing measurement result verification of a measurement device according to yet another exemplary embodiment;
- Fig. 5: is a schematic flow diagram of a method for managing device operation information about a measurement device according to yet another exemplary embodiment;
- Fig. 6: is a schematic diagram of an apparatus for managing information about a measurement device according to an exemplary embodiment; and
- Fig. 7: is a structural diagram of hardware for implementing embodiments of the apparatus for managing information about a measurement device provided in the specification.

### Description of embodiments

Exemplary embodiments will be described in detail herein, examples of which are shown in appended drawings. When reference is made to the appended drawings in the description below, identical numbers in different drawings represent identical or similar elements unless otherwise indicated. Implementations described in the following exemplary embodiments are not intended to represent all implementations consistent with one or more embodiments of the specification. Rather, they are merely examples of apparatuses and methods consistent with some aspects of one or more embodiments of the specification as detailed in the attached claims.

It should be noted that steps of a corresponding method in other embodiments may not be performed in the order shown and described in the specification. In some other embodiments, steps of the method may be more or fewer than those described in the specification. Moreover, a single step described in the specification may be decomposed into a plurality of steps in other embodiments for the descriptive purpose, while a plurality of steps described in the specification may be combined into a single step in other embodiment for the descriptive purpose as well.

Measurement devices have a wide range of applications in various industries. The life cycle of the measurement device may include a production stage, a logistics stage, an installation stage, a usage stage, a maintenance stage or any combination of the stages of the measurement device. During the life cycle of the measurement device, various device state information data can be produced, such as device production environment data produced in the production stage (including, for example, temperature and humidity, acid and alkali conditions, production parameters and difference adjustment parameters of devices such as machine tools, etc.), logistics circulation data produced in the logistics stage (including, for example, information about the time of exiting from and entering a logistics station, environmental information on the way, abnormal logistics transit information, etc.), installation adjustment data produced in the installation stage (including, for example, electronic lead-sealing states, device calibration information, initial parameters, etc.), normal or abnormal usage data produced in the usage stage (including measurement data produced in normal use, error information when an abnormality occurs, software information carried by the device, etc.), and information data produced in the maintenance stage (including maintenance records, precision information about the device after maintenance, software update version numbers, etc.).

The device state information produced in the life cycle of the measurement device is of vital significance for the normal use of the measurement device. Current methods for storing and managing various state information about a measurement device generally include decentralized physical storage information management, that is, storing the device state information into computing servers of a manufacturer, a logistics provider, and a user client respectively, or cloud storage data management performed by the multiple parties. Security for the storage and management of such device state information described is insufficient and thus at the risk of abnormal data modification. With a method of decentralized physical storage information management, information retrieval and multi-functional information application cannot be performed efficiently, and the information may be lost due to failure of a storage device. Furthermore, decentralized physical storage is disadvantageous to the coordination, management, and application of the device state information produced in the life cycle of the measurement device.

In the information management of the measurement devices based on the blockchains, which is proposed in the prior art, all relevant parties, such as the manufacturer, the logistics company, the user and the maintainer of the measurement device, in a life cycle of a measurement device are required to be deployed in the same blockchain, and since the device state information stored by each relevant party to the blockchain is backed up at each node device of the blockchain, it is difficult to guarantee the privacy and security of the information uploaded by each relevant party, and in addition, due to the excessive device state information data deposited by each relevant party, the physical configuration requirements for the node devices of each relevant party are increased.

In view of this, the specification provides a method for managing information about a measurement device, which is applied to a network system including a plurality of blockchains, the network system comprises data sender node devices and data manager node devices, wherein the data sender node devices are node devices for a first blockchain, and the data manager node devices are node devices for a second blockchain.

A blockchain according to one or more embodiments of the specification may, in particular, refer to a P2P network system achieved by various node devices through a consensus mechanism and having a distributed data storage structure, where data in a blockchain is distributed within various "blocks" consecutively connected in time, a latter block contains a data summary of a previous block, and full data backup of all or some of nodes is achieved according to different specific consensus mechanisms (such as POW, POS, DPOS or PBFT). It is well known to a person skilled in the art that since a blockchain system is running under a corresponding consensus mechanism, data recorded into a blockchain database is difficult to be tampered by any node, for example, for a blockchain employing Pow consensus, it would take a hash rate of at least 51% of the whole network to attack or tamper the existing data, therefore, the blockchain system is characterized by ensuring the security of data and protecting against attacking and tampering, which is incomparable by other centralized database systems. It can be seen therefrom that in the embodiments provided in the specification, data recorded into a distributed ledger of the blockchain cannot be attacked or tampered, thereby ensuring the authenticity and fairness of performing data management and application based on data stored in the blockchain.

A network system including a plurality of blockchains according to one or more embodiments of the specification is a multi-chain system composed of the plurality of blockchains, and data access or cross-chain invocation of a smart contract can be performed based on a cross-chain interaction technique between each blockchain. Whether each of the blockchains constituting the multi-chain system adopts the same underlying protocol is not defined in the specification, namely, the first blockchain and the second blockchain can either be homogeneous blockchains built based on the same blockchain underlying protocol, or heterogeneous blockchains built based on different blockchain underlying protocols.

In actual applications, all relevant parties involved in the life cycle of a measurement device (such as the manufacturer, logistics, user, maintainer) can construct their own blockchain based on their physical hardware power, or, multiple parties with mutual trust cooperatively build a blockchain comprising the multiparty node devices, or, relevant parties that have no requirement or power to build a blockchain can join a blockchain built by their trusted relevant party.

Since all relevant parties, such as the manufacturer, logistics, user, maintainer, involved in the life cycle of a measurement device have the demand to store the device state information about the measurement device into a blockchain, and also have the demand to manage information based on the device state information stored in the blockchain, a data sender or data manager according to each embodiment of the specification may be any of the parties involved in the life cycle of the measurement device.

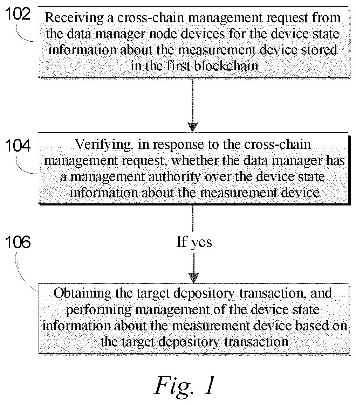

Fig. 1 illustrates process steps of a method for managing information about a measurement device performed by a node device in a first blockchain according to an exemplary embodiment of the specification, and the first blockchain stores a target depository transaction, sent by data sender node devices, that comprises device state information about the measurement device.

The specific type of the measurement device is not defined in the specification, and devices, apparatuses or device or apparatus modules that may have the function of measurement or calibration may all be encompassed within the scope of the measurement devices described in the specification.

The life cycle of the measurement device includes a plurality of stages within a cycle of the measurement device from production to retirement, such as a production stage, a logistics stage, an installation stage, a usage stage, a maintenance stage or any combination of the multiple stages.

Device state information corresponding to the production stage of the measurement device may include various production parameters recorded during production of the measurement device, such as production date, raw materials for production, production processes, product serial numbers, production environment, production device parameters, and information data of various production chains of the measurement device.

Device state information corresponding to the logistics stage of the measurement device may include information data produced by the measurement device in the circulation process after production, such as information about the time of exiting from and entering a logistics station, environmental information on the way, abnormal logistics transit information, and the like; and for a rather precise and precious measurement device, the device state information in the logistics stage is of vital depository significance in traceability management of the measurement device.

The measurement device, especially a large-scale or precise measurement device, needs to be installed and debugged before coming into use. Therefore, device state information corresponding to the installation stage of the measurement device may include calibration parameters required for use by the measurement device in the installation stage or data produced in the installation stage such as error probability parameters, installation state description, parameter backup or recovery information (for example, factory setting parameters), and the like.

The device state information corresponding to the usage stage of the measurement device may include any information data (including information such as image, temperature, three-dimensional size, weight acquired by the measurement device) produced or required for reference during the use of the measurement device, such as measurement data records produced in normal use, error information when an abnormality occurs (abnormal temperature, overloaded shock, etc.), measurement device operation information (which may include information about the operating personnel of the measurement device, or operation location information, or operation time information, or operation content information), software information carried by the device, standard operation procedure (SOP) information data, and the like.

Electronic lead-sealing information data of the measurement device is information data reflecting whether the measurement device is suffered from behaviors such as unknown sealing off or abnormal damage. Therefore, the device state information corresponding to the usage stage may also include the electronic lead-sealing information data of the measurement device (or a particular element or module of the measurement device).

The performance indicator data of the measurement device also belongs to the device state information corresponding to the usage stage, and based on the specific type and attribute of the measurement device, the device performance indicator data may include one or more of metering performance indicator data, measurement precision indicator data, creep indicator data, measurement repeatability indicator data, operating environment indicator data, and electromagnetic compatibility indicator data.

When the measurement device is used and operates, its operating states and measurement results may be affected by the operating environment. Therefore, the device state information corresponding to the usage stage may also include device operating environment data, such as one or more of temperature, humidity, air pressure, burden or load, shock, tilt, and other data when the device operates.

Device state information corresponding to the maintenance stage of the measurement device may include any information data produced or referenced and used by the measurement device during maintenance, such as recovery data (factory setting data), fault detection procedure data, maintenance records, maintenance service personnel data, maintenance time, maintenance device identifier, and the like.

Therefore, in order to complete the blockchain storage of the device state information corresponding to each stage of the life cycle of the measurement device, relevant parties corresponding to various stages of the life cycle of the measurement device: manufacturer, logistics, installer, user, maintainer (generally the same as the installer) can send target depository transaction to a blockchain to which the relevant party belongs to store the device state information.

It should be noted that, in one or more embodiments provided in the specification, the target depository transaction may include device state information of one type or in one life cycle stage; and may also include device state information of multiple types or in multiple life cycle stages; may include device state information about one measurement device, or may include device state information about multiple devices; which will not be defined in the specification.

The data sender node devices may be a computer device managing a production, logistics, installation, use or maintenance process of the measurement device, or may be a computer device communicatively connected to the measurement device, or may be the measurement device itself, which is not defined in the specification.

Further, in order to ensure the reliability and security of the state information about an on-chain device, the reliability of the measurement device of the data sender or the personnel of the information collection sender can be enhanced based on the authentication technology.

For example, when the personnel of the information collection sender enter the relevant working area, they are required to have identity identification authentication (specific identity identification authentication techniques may include pass identification, biological information identification, etc.) or, the identity authentication information of the relevant personnel of an information collection system (also can be used as part of the content included in the target depository transaction) is uploaded to the first blockchain for storage.

As another example, the data sender needs to pass the account and password authentication before using the information that needs to be entered through manual operation; the data sender can develop information collection system based on visualization interfaces such as web pages, computer or mobile phone APP clients, which supports a variety of information entry methods, such as scanning two-dimensional codes, image recognition, voice entry, etc.; the information collection system can also be interfaced to other information systems, and operating personnel can enter corresponding information according to the entries listed in the menu in the other information systems to enter the information into the blockchain.

As another example, when the measurement device is used as a data sender node device, the identity identification information of the measurement device, such as an electronic lead-sealing code, device model, and device weight and size and other physical information (also can be used as part of the content included in the target depository transaction), can be sent to the blockchain for depository. The first blockchain can also adopt a permission control policy, and only receive the target depository transaction sent by a measurement device that passed the identity authentication.

Once the consensus verification by the node device of the first blockchain on the target depository transaction including the device state information about the measurement device is passed, the target depository transaction is stored in the distributed database of the first blockchain, and any node device (comprising data sender node device) included in the first blockchain can then obtain the target depository transaction from the first blockchain ledger backed up thereby.

Step 102, receiving a cross-chain management request from the data manager node devices for the device state information about the measurement device stored in the first blockchain.

The specification does not define the specific steps of the cross-chain interaction technique used to send the cross-chain management request.

In an illustrated embodiment, a plurality of blockchains can achieve cross-chain interfacing via cross-chain relay devices. The cross-chain relay device can be respectively interfaced to the plurality of blockchains via a bridging interface, and based on an implemented data transmission logic, complete the cross-chain data interaction between the plurality of blockchains.

The cross-chain technique used in the implementation of the cross-chain relay will not be specifically defined in the specification; for example, in actual applications, the plurality of blockchains can be connected through cross-chain mechanisms such as side-chain technology and notary technology. After the plurality of blockchains are interfaced by means of cross-chain relays, the blockchains can read and authenticate data on the other blockchains among each other, and can also invoke smart contracts deployed on the other blockchains through cross-chain relays.

It should be noted that the cross-chain relay is only used to transmit data between the plurality of blockchains. It does not need to store the transmitted data persistently, nor does it need to maintain the data state of the transmitted data. In actual applications, the cross-chain relays can be configured on devices, nodes, or platforms outside the plurality of blockchains to which they are connected, or on node devices of the plurality of blockchains to which they are connected, which is not specifically defined in the specification.

In this embodiment, the cross-chain management request is sent by the data manager node device to the node device (including the data sender node device) of the first blockchain via the cross-chain relay device. In particular, the cross-chain relay device may be a common node device of the first blockchains and the second blockchain. The data manager node device sends a management request for device state information to a node device (including a data sender node device) of the first blockchain by interacting with the common node device.

In yet another illustrated embodiment, the first blockchain and the second blockchain are different sub-chains belonging to the same alliance chain, and the data manager node device belonging to the second blockchain can initiate a data management request to the first blockchain, and based on a cross-chain data access mechanism setting of the alliance chain, send a cross-chain management request to the node device of the first blockchain.

Each embodiment provided in the specification does not define the specific content of the cross-chain management request, which may be a cross-chain data obtaining request to obtain the device state information about the measurement device stored in the first blockchain, and may also be a cross-chain data application request to realize in the node device of the first blockchain the application management of the device state information.

Step 104, verifying, in response to the cross-chain management request, whether the data manager has a management authority over the device state information about the measurement device.

The multi-chain system will be provided with a corresponding authority control mechanism to manage the node devices in the system for management behaviors such as cross-chain data access or cross-chain data application.

When the first blockchain and second blockchain are different sub-chains belonging to the same alliance chain, based on a transaction read and write authority control mechanism of the alliance chain, the management authority of the data manager over the device state information included in the target depository transaction can be controlled by controlling the obtaining authority of the data manager node device over the target depository transaction.

When the first blockchain and the second blockchain do not have an alliance relationship, and after the data manager node device applies via the cross-chain relay device, the management node (or data sender node device) of the first blockchain can issue a digital certificate to the data manager with management authority such as device state information obtaining or application authority; and when the data manager node device sends the cross-chain management application to the management node (or data sender node device) of the first blockchain via the cross-chain relay device, based on the digital certificate of the data manager, whether it has the management authority over the device state information can be verified.

In yet another illustrated embodiment, the first blockchain is deployed with a smart contract for managing the device state information, and a processing logic corresponding to the contract code of the smart contract comprises a management authority verification logic; and said verifying, in response to the cross-chain access request, whether the data manager has a management authority over the device state information about the measurement device comprises:
invoking, in response to the cross-chain access request, the management authority verification logic in the smart contract to verify whether the data manager has the management authority over the device state information about the measurement device.

Specifically, the process of said verifying whether the data manager has a management authority over the device state information about the measurement device comprises: verifying whether a public key corresponding to the data manager belongs to a user whitelist set by the smart contract and having management authority over device state information.

Step 106, if yes, obtaining a target depository transaction sent by the data sender node device to the first blockchain, and performing management of the device state information about the measurement device based on the target depository transaction.

Based on the data storage setting of the first blockchain, the target depository transaction can be stored in the distributed ledger (such as a block) of the blockchain, or can be stored in the account storage space corresponding to an account of the smart contract, which is not defined in the embodiment. For example, the smart contract can obtain the target depository transaction based on the address (TXhash) of the target depository transaction.

When the cross-chain management request is a request for obtaining device state information about the measurement device, the management of the device state information about the measurement device performed by the node device of the first blockchain is specifically demonstrated as: sending the device state information about the measurement device to the data manager node devices across chains, to enable the data manager node device to perform further application on the device state information about the measurement device.

When the cross-chain management request is an application management request for device state information about the measurement device, in yet another illustrated embodiment, the processing logic corresponding to the contract code of the smart contract further comprises a management logic for the device state information; accordingly, performing, by the node device of the first blockchain, management of the device state information about the measurement device comprises:
further invoking, by the node device of the first blockchain, after verifying that the data manager has the management authority over the device state information about the measurement device, the management logic in the smart contract for the device state information, obtain the target depository transaction sent by the data sender node device to the first blockchain, and perform management of the device state information about the measurement device based on the target depository transaction.

It can be seen from the technical solutions that with the method for managing information about a measurement device provided in the one or more embodiments, the device state information about the measurement device is stored in the first blockchain in a decentralized manner to prevent tampering, in addition, the management of device state information based on a cross-chain information interaction technique for a plurality of blockchains further increases the privacy and security of device state information data and reduces the physical configuration requirements for the node devices on each blockchain. After the data manager node device obtains the device state information, not only can the application management of the device state information be carried out locally in the data manager node device, but also the smart contract deployed on the second blockchain, which declares the management logic for the device state information, can be invoked to quickly and fairly carry out the application management of the device state information.

When the data manager node device of the second blockchain completes the management of the device state information about the measurement device by making a cross-chain invocation to the smart contract deployed by the first blockchain, compared with locally running device state information management by the data manager node device in a centralized manner, the smart contract is invoked at any time according to the cross-chain management request of the data manager, so that the efficiency of device state information management is greatly improved; moreover, performing with the smart contract has the advantages of lower human intervention and decentralized authority, which further increases the fairness of device state information management behaviors.

Contents of the device state information stored in the distributed ledger of the first blockchain may increase continuously with the circulation and use of the measurement device. Based on the state data of the measurement device, analysis and application may be performed on various device state information about the measurement device, for example, big data analysis or artificial intelligence technology may be used to perform information analysis on a full life cycle of the measurement device, or life cycle management contents of the measurement device such as traceability tracking, usage calibration, lead-sealing state determination, and usage state determination.

It is known to a person skilled in the art that the one or more embodiments start from the aspects of the data sender and the data manager, and the blockchain to which the data sender belongs is defined as the first blockchain, and the blockchain to which the data manager belongs is defined as the second blockchain; since in actual applications, a node device may be either a data sender or a data manager, and the blockchain to which the node device belongs is the first blockchain when it is a data sender and the second blockchain when it is a data manager.

The description will provide below a plurality of embodiments of information management of measurement device based on the device state information included in the target depository transaction.

### [Information inquiry management]

A measurement device generally undergoes production, calibration, authentication, logistics and other stages from production to delivery to a user, and device state information produced in these stages would continuously be stored into a first blockchain to which it belongs by different data sender node devices, for example, raw material information (such as a material number) or production process information about the measurement device may be sent at a production information recording node, initial calibration information about the measurement device may be sent by a node responsible for calibrating the measurement device, quality certification information about the measurement device may be sent by a measurement authentication institute node, and logistics circulation information about the measurement device may be sent by a logistics node.

Based on their own computer physical configurations and information security and privacy demands, the above production information recording node, the node responsible for calibrating the measurement device, the measurement authentication institute node, and the logistics node may be in the same blockchain (namely, the first blockchain described in a plurality of embodiments described above), or may be in a plurality of different blockchains (namely, in a plurality of first blockchains).

A measurement device user node device, as a data manager, may belong to the second blockchain system described in the above embodiments. The measurement device user node device may initiate, based on usage demands, a cross-chain access request (as an embodiment of a cross-chain management request) to access the device state information stored in the first blockchains described above.

In order to facilitate inquiry and retrieval, by node devices of the first blockchains, of specific information requested to be accessed by the measurement device user node device, a unique identification code corresponding to the measurement device may be included in target depository transactions stored in the first blockchains and the cross-chain access request, so that the node devices of the first blockchains may perform retrieval based on the unique identification code of the measurement device after verifying that a measurement device user possesses corresponding access permission (as an implementation of management authority), and send the device state information requested to be accessed to the measurement device user node device quickly across chains.

For example, a manufacturer of the measurement device, a logistics agency, and the measurement authentication institute, as reliable partners to each other, may build a blockchain (which may serve as a first blockchain) to store and share the state information about the measurement device. After the development is completed, the measurement device needs to pass the authentication of relevant metering rules and regulations before coming into the market. Based on the method for managing information about a measurement device provided in the embodiments of the specification, the manufacturer (as a data sender) first configures a model machine for the measurement device to be authenticated and sends the relevant configuration information to the first blockchain, then the model machine which needs to be authenticated is transferred to a third party authentication institute through logistics, and logistics information produced in this process may also be uploaded to the first blockchain by the logistics agency (as the data sender). The measurement authentication institute performs authentication with the metering rules and regulations after receiving the model machine of the measurement device, and authentication result information for the measurement device may be uploaded to the first blockchain. A manufacturer node device in the first blockchain may inquire the authentication information about the measurement device in real time and make relevant improvements and updates the measurement device in time. If an enterprise purchases the measurement device, since the enterprise terminal may not join the first blockchain, but belongs to a second blockchain, the enterprise terminal node device may access, based on the method for managing information about a measurement device described in the embodiments, the authentication result information stored in the first blockchain across chains, so as to identify the reliability and security of the measurement device.

As another example, measurement device replicating parameters sent by the measurement device manufacturer node device may be stored in the first blockchain, so that node devices of the second blockchain obtain the measurement device replicating parameters after a cross-chain device replicating request described in the embodiments, thereby completing replicating of the measurement device.

### [Calibration information management of measurement device based on smart contract]

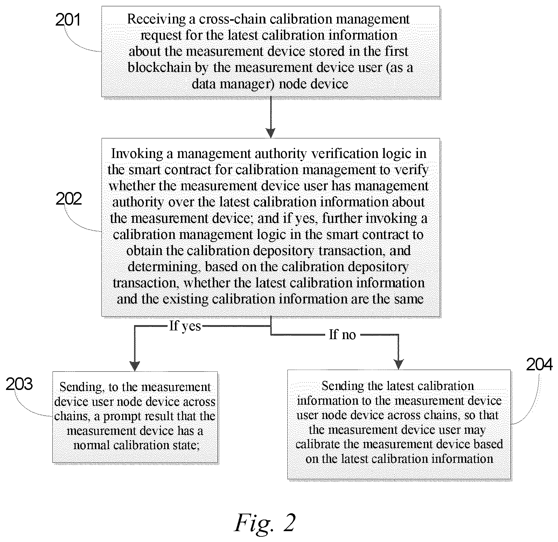

The measurement device user needs to calibrate the measurement device periodically or on request based on device management demands during the use of the measurement device. A calibration depository transaction sent by the measurement device manufacturer or a maintainer is stored in the first blockchain. The calibration depository transaction comprises the latest calibration information about the measurement device. Fig. 2 illustrates a process of managing calibration information about a measurement device based on the method for managing a measurement device provided in the specification. The process is performed by the node devices included in the first blockchain and comprises:
step 201, receiving a cross-chain calibration management request for the latest calibration information about the measurement device stored in the first blockchain by the measurement device user (as a data manager) node device, wherein the cross-chain calibration management request comprises the existing calibration information about the measurement device and an address of a smart contract for calibration management deployed in the first blockchain;
step 202, invoking a management authority verification logic in the smart contract for calibration management to verify whether the measurement device user has management authority over the latest calibration information about the measurement device; and if yes, further invoking a calibration management logic in the smart contract to obtain the calibration depository transaction, and determining, based on the calibration depository transaction, whether the latest calibration information and the existing calibration information are the same;
step 203, if the latest calibration information and the existing calibration information are the same, sending, to the measurement device user node device across chains, a prompt result that the measurement device has a normal calibration state; and
step 204, if the latest calibration information is different from the existing calibration information, sending the latest calibration information to the measurement device user node device across chains, so that the measurement device user may calibrate the measurement device based on the latest calibration information.

Calibration management of the measurement device may be completed automatically by initiating, by a data manager node device or based on a client installed on a smart device terminal such as a mobile phone, a cross-chain invocation of the smart contract deployed on the first blockchain, which saves the time and economic cost spent in calibrating the measurement device on site by professional personnel. Moreover, results of running the smart contract may be stored in the first blockchain in the form of a transaction log, and the node devices of the first blockchain, for example, the measurement device manufacturer or maintainer, may also learn the calibration state of the measurement device accurately by monitoring the results of running the smart contract, so as to facilitate providing measurement device maintenance or repair advice to the measurement device user.

### [Method for managing electronic lead-sealing information about measurement device based on smart contract]

In order to ensure the security or accuracy of the measurement device and prevent the measurement device from being enabled or having parameters changed without authorization, an electronic lead-sealing module is generally provided for protecting the measurement device. The electronic lead-sealing module (such as an RFID radio frequency chip) is configured with a unique lead-sealing identification code which may correspond to an identity identifier such as a product serial number of the measurement device on a one-to-one basis. In this embodiment, a lead-sealing identification code depository transaction sent by the measurement device manufacturer or maintainer may be stored in the first blockchain, and the transaction comprises the latest lead-sealing identification code of the measurement device.

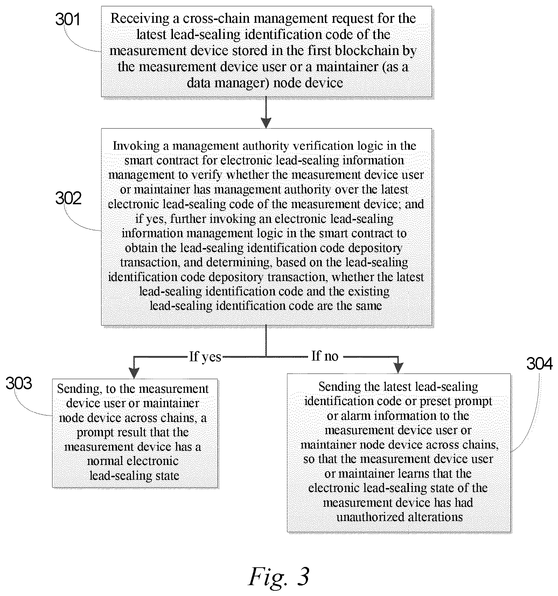

Fig. 3 illustrates a process of managing electronic lead-sealing information about a measurement device based on the method for managing a measurement device provided in the specification. The process is performed by the node devices included in the first blockchain and comprises:
step 301, receiving a cross-chain management request for the latest lead-sealing identification code of the measurement device stored in the first blockchain by the measurement device user or a maintainer (as a data manager) node device, wherein the cross-chain management request comprises the existing lead-sealing identification code of the measurement device and an address of a smart contract for electronic lead-sealing information management deployed in the first blockchain;
step 302, invoking a management authority verification logic in the smart contract for electronic lead-sealing information management to verify whether the measurement device user or maintainer has management authority over the latest electronic lead-sealing code of the measurement device; and if yes, further invoking an electronic lead-sealing information management logic in the smart contract to obtain the lead-sealing identification code depository transaction, and determining, based on the lead-sealing identification code depository transaction, whether the latest lead-sealing identification code and the existing lead-sealing identification code are the same;
step 303, if the latest lead-sealing identification code and the existing lead-sealing identification code are the same, sending, to the measurement device user or maintainer node device across chains, a prompt result that the measurement device has a normal electronic lead-sealing state; and
step 304, if the latest lead-sealing identification code is different from the existing lead-sealing identification code, sending the latest lead-sealing identification code or preset prompt or alarm information to the measurement device user or maintainer node device across chains, so that the measurement device user or maintainer learns that the electronic lead-sealing state of the measurement device has had unauthorized alterations.

Electronic lead-sealing information management of the measurement device may be completed automatically by initiating, by a data manager node device or based on a client installed on a smart device terminal such as a mobile phone, a cross-chain invocation of the smart contract deployed on the first blockchain, which saves the time and economic cost spent in comparing the electronic lead-sealing codes of the measurement device on site by professional personnel. Moreover, results of running the smart contract may be stored in the first blockchain in the form of a transaction log, and the node devices of the first blockchain, for example, the measurement device manufacturer or maintainer, may also learn the existing electronic lead-sealing code state of the measurement device accurately by monitoring the results of running the smart contract, so as to facilitate providing measurement device maintenance or repair advice to the measurement device user.

### [Method for managing abnormal state of measurement device]

Manufacturers of the measurement device may build a manufacturer blockchain based on their own information security management demands. As described in the above embodiment, the manufacturer blockchain may also include node devices such as logistics agencies, measurement device authentication institutes, or maintainers of the measurement device. Users of the measurement device may build a user blockchain (such as a private chain) based on their own information security management demands, or join a multi-user blockchain formed by multiple measurement device users. The measurement device itself may also be used as a node device of the user blockchain. The node device directly sends data information acquired by the measurement device to the user blockchain during use.

The measurement device is generally configured with various types of sensors to acquire data signals or monitor a use environment condition for the device. During use, when abnormal state information, for example, abnormal temperature information, humidity information, shock information, and the like, is sensed by the measurement device or a sensing module provided in the measurement device, the abnormal state information may be uploaded, in a transaction format, to the user blockchain to which the measurement device belongs, so as to perform blockchain depository for the above abnormal state information.

The manufacturer or maintainer of the measurement device, when performing failure analysis on the measurement device, can initiate a cross-chain data access request to the user blockchain based on the method for managing information about the measurement device described in one or more of the above embodiments, so as to receive the abnormal state information sent by the node devices of the user blockchain across chains, after the request permission is verified. In the above process, the user blockchain is the first blockchain described in the above embodiments, and the manufacturer blockchain is the second blockchain described in the above embodiments.

After obtaining the abnormal state information, the manufacturer or maintainer of the measurement device may perform preliminary high-probability failure analysis by performing big data analysis on the abnormal state information or combining relevant technologies such as artificial intelligence technology, and at the same time, uploading the failure analysis results to the manufacturer blockchain.

After this, the measurement device user node device may initiate a cross-chain data access request to the manufacturer blockchain based on the method for managing information about the measurement device described in one or more of the above embodiments, so as to receive the failure analysis result information sent by the node devices of the manufacturer blockchain across chains, after the request permission is verified. In the above process, the manufacturer blockchain is then the first blockchain described in the above embodiments, and the user blockchain is the second blockchain described in the above embodiments.

Through the above information management process, the measurement device user may obtain the analysis result of the abnormal failure of the measurement device without the presence of professional maintenance personnel (which may include coping strategies), thus greatly saving the cost of failure analysis or maintenance of the measurement device performed by professional failure maintenance or analysis personnel on site.

### [Method for managing software version upgrading of measurement device based on smart contract]

In yet another illustrated embodiment, the target depository transaction stored in the first blockchain (such as the manufacturer blockchain) may include the latest software program corresponding to the measurement device and the version number of the latest software program, and a smart contract for software management of the measurement device is deployed in the first blockchain.

The measurement device nodes in the second blockchain (such as the user blockchain) may periodically send a version management request to the first blockchain across chains. The version management request includes the version number of the current software program of the measurement device. After verifying that the measurement device has a preset version management authority, the smart contract is used to obtain the target depository transaction, and compare the version number of the latest software program contained in the target depository transaction and the version number of the current software program. When the two version numbers are different by a preset level, the latest software program may be sent to the measurement device nodes in the second blockchain across chains to enable the measurement device nodes to perform software version upgrading.

### [Method for managing measurement result verification of measurement device based on smart contract]

The method for managing information about a measurement device provided in the specification may also be used to store and verify measurement results. In yet another illustrated embodiment, the target depository transaction stored in the first blockchain (such as the user blockchain) may include first measurement result information obtained by measuring an object to be measured by means of a node device (as a data sender) of the first blockchain using a measurement device, and a smart contract for measurement result verification of the measurement device is deployed in the first blockchain.

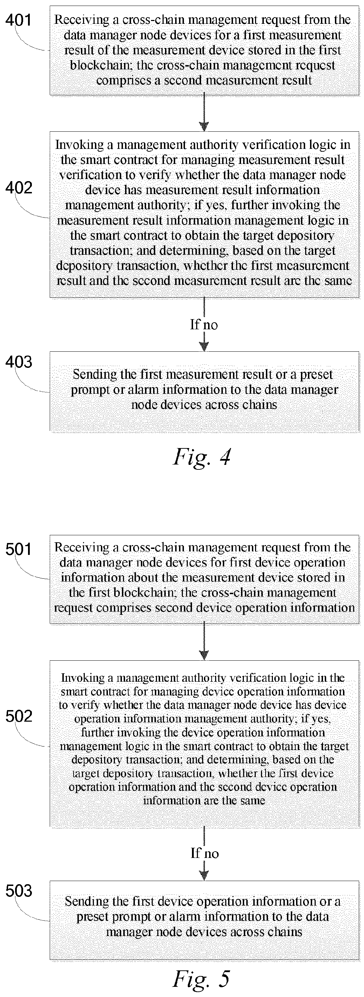

As shown in Fig. 4, the node devices in the second blockchain (such as another user blockchain) may use the same or same type of measurement device to measure the same or same type of object to be measured to obtain second measurement result information; and initiate, based on the second measurement result information, a cross-chain measurement result management request to the node devices of the first blockchain to invoke the smart contract. After verifying that the node device of the second blockchain has a preset measurement result information management authority, the smart contract is used to obtain the target depository transaction, and compare whether the first measurement result information contained in the target depository transaction and the second measurement result information are the same; and if the first measurement result information is different from the second measurement result information, the first measurement result information or a preset prompt or alarm operation may be sent to the node device (as a data manager) of the second blockchain across chains to prompt the node device of the second blockchain that the measurement result on the object to be measured that is obtained by means of a measurement device used by that node device itself is different from the measurement results on the same or same type of object to be measured that are obtained by other parties by means of the same or same type of measurement device, so as to find the cause.

### [Method for managing operation information about measurement device based on smart contract]

The method for managing information about a measurement device provided in the specification may also be used to store and verify operation information about the measurement device. In yet another illustrated embodiment, the target depository transaction stored in the first blockchain (such as the user blockchain or the manufacturer blockchain) may include first device operation information obtained by means of a node device (as a data sender) of the first blockchain using a measurement device. The device operation information may include an input parameter range, temperature and humidity conditions, and the like for operating the device, and a smart contract for managing the operation information about the measurement device is deployed in the first blockchain.

As shown in Fig. 5, the node devices in the second blockchain (such as another user blockchain) may initiate, based on second device operation information when using the same or same type of measurement device, a cross-chain measurement device operation information management request to the node devices of the first blockchain to invoke the smart contract. After verifying that the node device of the second blockchain has a preset measurement device operation information management authority, the smart contract is used to obtain the target depository transaction, and compare whether the first device operation information contained in the target depository transaction and the second device operation information are the same; and if the first device operation information is different from the second device operation information, the first device operation information or a preset prompt or alarm operation may be sent to the node device (as a data manager) of the second blockchain across chains to prompt the node device of the second blockchain that the device operation information that is obtained by that node device itself by means of a measurement device is different from device operation information that is obtained by other parties by means of the same or same type of measurement device, so as to find the cause.

In particular, the first device operation information may be a standard for operation information about a measurement device, which is sent by a device manufacturer node device or a maintainer node device of the first blockchain to the first blockchain for depository; and any device user of the second blockchain may learn, based on the cross-chain invocation of the smart contract, whether its operation on the measurement device conforms to a preset operation standard so as to improve the measurement precision.

### [Method for managing electronic contract signing of measurement device]

When a user of a measurement device purchases a measurement device from the manufacturer of the measurement device, they usually need to sign a purchase contract. In yet another illustrated embodiment, the manufacturer node device of the measurement device belongs to the manufacturer blockchain described in one of the above embodiments, and the user node device of the measurement device belongs to the user blockchain described in one of the above embodiments.

The manufacturer node device of the measurement device may send the electronic contract signed by itself to the manufacturer blockchain to which it belongs; the user node device of the measurement device initiates a cross-chain access request to the electronic contract and obtains, after it is verified that a node device of the manufacturer blockchain has an access permission for the electronic contract, the electronic contract and sends the electronic contract signed by the user to the user blockchain to which it belongs. At this time, the manufacture node device may also initiate a cross-chain access request to the electronic contract to the user's blockchain and obtain, after it is verified that a node device of the user blockchain has an access permission for the electronic contract, the electronic contract signed by both parties.

It is known to a person skilled in the art that the user of the measurement device may also sign the electronic contract first, and then obtain the electronic contract signed by both parties after the two similar cross-chain access processes described above.

The manufacturer blockchain and the user blockchain may be used as the first blockchain or the second blockchain to complete the signing process of the electronic contract; and based on the tamper-resistant mechanism for blockchains, the process of contract signing is deposited at nodes.

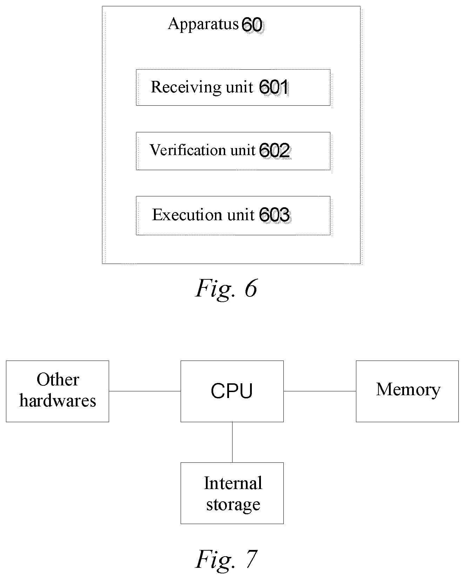

Corresponding to the above process implementation, the embodiments of the specification further provide an apparatus 60 for managing information about a measurement device. The apparatus 60 may be implemented by software, and may also be implemented by hardware or a combination of software and hardware. Taking software implementation as an example, as an apparatus in a logical sense, it is formed by reading a corresponding computer program instruction into a memory through a CPU (Central Process Unit) of a device where it is located. In terms of hardware, in addition to the CPU, the internal storage, and the memory shown in Fig. 7, the device where the above apparatus is located generally also includes other hardwares such as a chip for wireless signal transmission and reception, and/or a board card for realizing network communication function and other hardwares.

As shown in Fig. 6, the specification further provides an apparatus 60 for managing information about a measurement device, which is applied to a network system including a plurality of blockchains, the network system comprising data sender node devices and data manager node devices, wherein the data sender node devices are node devices for a first blockchain, and the data manager node devices are node devices for a second blockchain; the first blockchain storing a target depository transaction, sent by the data sender node devices, that comprises device state information about the measurement device; the apparatus 60 being applied at a node device of the first blockchain, and comprising:
a receiving unit 602 for receiving a cross-chain management request from the data manager node devices for the device state information about the measurement device stored in the first blockchain; and
a verification unit 604 for verifying, in response to the cross-chain management request, whether the data manager has a management authority over the device state information about the measurement device; and
an execution unit 606 for obtaining the target depository transaction, and performing management of the device state information about the measurement device based on the target depository transaction.

In yet another illustrated embodiment, the cross-chain management request is a request for obtaining the device state information about the measurement device across chains; and the execution unit 606 is further configured to:
obtain the target depository transaction, and send the device state information about the measurement device to the data manager node devices across chains.

In yet another illustrated embodiment, the first blockchain is deployed with a smart contract for managing the device state information, and a processing logic corresponding to the contract code of the smart contract comprises a management authority verification logic; and the verification unit 602 is further configured to:
invoke, in response to the cross-chain access request, the management authority verification logic in the smart contract to verify whether the data manager has the management authority over the device state information about the measurement device.

In yet another illustrated embodiment, the processing logic corresponding to the contract code of the smart contract further comprises a management logic for the device state information; and the execution unit 606 is further configured to:
further invoke, after verifying that the data manager has the management authority over the device state information about the measurement device, the management logic in the smart contract for the device state information, obtain the target depository transaction, and perform management of the device state information about the measurement device based on the target depository transaction.

In yet another illustrated embodiment, the first blockchain and the second blockchain are different sub-chains belonging to the same alliance chain.

In yet another illustrated embodiment, the receiving unit 602 is further configured to:
receive, via a cross-chain relay device, a cross-chain access request from the data manager node devices for the device state information about the measurement device stored in the first blockchain.

In yet another illustrated embodiment, the data sender node devices comprise one or more of a production recording node device of the measurement device, or an initial calibration node device, or a measurement authentication institute node device, or a logistics agency node device;
the target depository transaction comprises a unique identification code corresponding to the measurement device; and the device state information comprises one or more of raw material information, production process information, initial calibration information, quality certification information, logistics circulation information, or a device replicating parameter.

In yet another illustrated embodiment, the target depository transaction comprises the latest electronic lead-sealing code of the measurement device; the cross-chain management request comprises an existing lead-sealing identification code of the measurement device; and the management logic for the device state information that is comprised by the processing logic corresponding to the contract code of the smart contract comprises:
step A, obtaining the target depository transaction;
step B, determining, based on the target depository transaction, whether the latest lead-sealing identification code and the existing lead-sealing identification code are the same; and
step C, sending, if the latest lead-sealing identification code is different from the existing lead-sealing identification code, a preset prompt or alarm operation to the data manager node devices across chains.

In yet another illustrated embodiment, the target depository transaction comprises the latest calibration information about the measurement device; the cross-chain management request comprises existing calibration information about the measurement device; and the management logic for the device state information that is comprised by the processing logic corresponding to the contract code of the smart contract comprises:
step A, obtaining the target depository transaction;
step B, determining, based on the target depository transaction, whether the latest calibration information and the existing calibration information are the same; and
step C, sending, if the latest calibration information is different from the existing calibration information, the latest calibration information to the data manager node devices across chains, so that the data manager node devices can calibrate the measurement device based on the latest calibration information.

In yet another illustrated embodiment, the target depository transaction comprises the latest software program corresponding to the measurement device and the version number of the latest software program; the data manager node device is the measurement device; the cross-chain management request comprises the version number of a current software program of the measurement device; and the management logic for the device state information that is comprised by the processing logic corresponding to the contract code of the smart contract comprises:
step A, obtaining the target depository transaction;
step B, comparing, based on the target depository transaction, whether the version number of the latest software program and the version number of the current software program differ by a preset level; and
step C, if yes, sending the latest software program to the measurement device across chains, so that the measurement device performs upgrading of the software version.

For details about the implementation process of the functions and effects of the units in the above apparatus 60, see the implementation process of the corresponding steps in the method for managing information about a measurement device performed by the node devices of the first blockchain, and for the relevant parts, see the description in the section of the method embodiment which is not repeated here.

The embodiments of the apparatus described above are merely illustrative, and units illustrated as separate components may be or may not be physically separated, and the components illustrated as units may or may not be physical modules, that is, may be positioned at one place or may be distributed to multiple network modules. Some or all of the units or modules may be selected according to actual needs to achieve the objectives of the solution in this specification. Those of ordinary skill in the art can understand and implement the invention without creative efforts.

The apparatus, units, and modules described in the above embodiments may be specifically implemented by a computer chip or entity, or may be implemented by a product having a certain function. A typical implementation device is a computer, and the specific form of the computer may be a personal computer, a laptop computer, a cellular phone, a camera phone, a smart phone, a personal digital assistant, a media player, a navigation device, an email sending and receiving device, and a game control desk, a tablet computer, a wearable device, or a combination of any of these devices.

Corresponding to the above embodiments of the method, the embodiments of the specification further provide a computer device, as shown in Fig. 7, which includes a memory and a processor. The memory has stored thereon a computer program executable by the processor. The processor, when executing the stored computer program, implementing the various steps of the method for managing information about a measurement device, which is performed by the node devices of the first blockchain as described in the embodiments of the specification. For a detailed description of each step of the method for managing information about a measurement device which is performed by the node devices of the first blockchain, please refer to the previous content, and will not be repeated.

Corresponding to the above embodiments of the method, the embodiments of the specification further provide a computer readable storage medium which has stored thereon a computer program that, when executed by a processor, cause the implementation of the steps of the method for managing information about a measurement device, which is performed by the node devices of the blockchain as described in the embodiments of the specification. For a detailed description of each step of the method for managing information about a measurement device which is performed by the node devices of the first blockchain, please refer to the previous content, and will not be repeated.

The above are only the preferred embodiments of this specification and are not intended to limit this specification. Any modification, equivalent replacement, or improvement made within the spirit and principles of this specification shall be included within the protection scope of this specification.

In a typical configuration, a computing device comprises one or more central processing units (CPUs), an input/output interface, a network interface, and a memory.

The memory may include a non-permanent memory, a random access memory (RAM) and/or a non-volatile memory (such as a read-only memory (ROM) or a flash memory (flash RAM)) and so on in a computer-readable medium. The memory is an example of the computer-readable mediums.

The computer-readable medium comprises non-volatile and volatile media, and removable and non-removable media, wherein information storage can be implemented with any method or technology. Information may be computer-readable instructions, data structures, modules of programs, or other data.

The examples of a computer storage medium include but are not limited to a phase change memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, compact disk read-only memory (CD-ROM), a digital versatile disc (DVD) or other optical storages, a magnetic cassette tape, and magnetic tape and magnetic disk storage or other magnetic storage devices or any other non-transmission media, which can be used to store information that can be accessed by a computing device. According to the definition herein, the computer-readable medium does not include a non-transitory computer-readable medium, such as a modulated data signal and carrier.

It should further be noted that the terms "comprising", "including" or any other variations thereof are intended to cover non-exhaustive inclusion, so that processes, methods, merchants or devices including a series of elements not only include those elements but also include other elements which are not listed expressly or include all inherent elements of such processes, methods, commodities or devices. If no more limitations are made, an element limited by "comprising a/an..." does not exclude other identical elements existing in the process, the method, the commodity, or the device which includes the element.

A person skilled in the art will understand that an embodiment of the disclosure may be provided as a method, a system, or a computer program product. Therefore, the embodiments of the specification may use a form of hardware only embodiments, software only embodiments, or embodiments with a combination of software and hardware. Moreover, the embodiments of the specification may use a form of a computer program product that is implemented on one or more computer-usable storage media (including but not limited to a disk memory, a CD-ROM, an optical memory, and the like) that comprise computer usable program code.

### Reference signs list

- 102: Step 102
- 104: Step 104
- 106: Step 106
- 201: Step 201
- 202: Step 202
- 203: Step 203
- 204: Step 204
- 301: Step 301
- 302: Step 302
- 303: Step 303
- 304: Step 304
- 401: Step 401
- 402: Step 402
- 403: Step 403
- 501: Step 501
- 502: Step 502
- 503: Step 503
- 60: Apparatus
- 601: Receiving unit
- 602: Verification unit
- 603: Execution unit

## Claims

1. A computer-implemented method for managing information about a measurement device, which is applied to a network system including a plurality of blockchains, the network system comprising data sender node devices and data manager node devices, wherein the data sender node devices are node devices for a first blockchain, and the data manager node devices are node devices for a second blockchain; the first blockchain storing a target depository transaction, sent by the data sender node devices, that comprises device state information about the measurement device; the method being executed by a node device of the first blockchain, and comprising the steps of:
receiving a cross-chain management request from the data manager node devices for the device state information about the measurement device stored in the first blockchain; and
verifying, in response to the cross-chain management request, whether the data manager has a management authority over the device state information about the measurement device; and
if yes, obtaining the target depository transaction, and performing management of the device state information about the measurement device based on the target depository transaction.

2. The method of claim 1, wherein
the cross-chain management request is a request for obtaining the device state information about the measurement device across chains; and
said performing management of the device state information about the measurement device comprises:
sending the device state information about the measurement device to the data manager node devices across chains.

3. The method of claim 1, wherein
the first blockchain is deployed with a smart contract for managing the device state information, and a processing logic corresponding to the contract code of the smart contract comprises a management authority verification logic; and
said verifying, in response to the cross-chain access request, whether the data manager has a management authority over the device state information about the measurement device comprises:
invoking, in response to the cross-chain access request, the management authority verification logic in the smart contract to verify whether the data manager has the management authority over the device state information about the measurement device.

4. The method of claim 3, wherein
the processing logic corresponding to the contract code of the smart contract further comprises a management logic for the device state information; and
said obtaining the target depository transaction, and performing management of the device state information about the measurement device based on the target depository transaction comprises:
further invoking, after verifying that the data manager has the management authority over the device state information about the measurement device, the management logic in the smart contract for the device state information, obtain the target depository transaction, and perform management of the device state information about the measurement device based on the target depository transaction.

5. The method of claim 1, wherein
the first blockchain and the second blockchain are different sub-chains belonging to the same alliance chain.

6. The method of claim 1, wherein
said receiving a cross-chain access request from the data manager node devices for the device state information about the measurement device stored in the first blockchain comprises:
receiving, via a cross-chain relay device, a cross-chain access request from the data manager node devices for the device state information about the measurement device stored in the first blockchain.

7. The method of any one of claims 1 to 6, wherein
the data sender node devices comprise one or more of
a production recording node device of the measurement device, or
an initial calibration node device, or
a measurement authentication institute node device, or
a logistics agency node device, or
a user node device, or
a maintainer node device;
the target depository transaction comprises a unique identification code corresponding to the measurement device; and the device state information comprises one or more of
raw material information,
production process information,
initial calibration information,
quality certification information,
logistics circulation information,
a device replicating parameter,
abnormal state information,
measurement data record information,
maintenance record information, or
electronic contract information
related to the measurement device.

8. The method of claim 4, wherein
the target depository transaction comprises at least one of the following:
the latest electronic lead-sealing code of the measurement device,
the latest calibration information about the measurement device,
the latest software program corresponding to the measurement device and the version number of the latest software program, wherein the data manager node device is the measurement device,
first measurement result information about the measurement device
first device operation information about the measurement device;
the cross-chain management request comprises at least one of the following:
an existing lead-sealing identification code of the measurement device,
existing calibration information about the measurement device,
the version number of a current software program of the measurement device,
second measurement result information about the measurement device,
second device operation information about the measurement device; and
the management logic for the device state information that is comprised by the processing logic corresponding to the contract code of the smart contract comprises:
step A, obtaining the target depository transaction;
step B, based on the target depository transaction,
determining whether the latest lead-sealing identification code and the existing lead-sealing identification code are the same, or
determining whether the latest calibration information and the existing calibration information are the same, or
comparing whether the version number of the latest software program and the version number of the current software program differ by a preset level, or
determining whether the first measurement result information and the second measurement result information are the same, or
determining whether the first device operation information and the second device operation information are the same; and
step C, sending,
if the latest lead-sealing identification code is different from the existing lead-sealing identification code, a preset prompt or alarm operation to the data manager node devices across chains, or
if the latest calibration information is different from the existing calibration information, the latest calibration information to the data manager node devices across chains, so that the data manager node devices can calibrate the measurement device based on the latest calibration information, or
if the version numbers differ by a preset level the latest software program to the measurement device across chains, so that the measurement device performs upgrading of the software version, or
if the first measurement result information is different from the second measurement result information, the first measurement result information or a preset prompt or alarm operation to the data manager node devices across chains, or
if the first device operation information is different from the second device operation information, the first device operation information or a preset prompt or alarm operation to the data manager node devices across chains.

9. A computer device, comprising: a memory and a processor, wherein the memory has stored thereon a computer program executable by the processor that, when executed by the processor, causes the implementation of the method of any one of claims 1 to 8.

10. A computer readable storage medium having stored thereon a computer program, wherein the computer program, when executed by a processor, causes the steps of the method of any one of claims 1 to 8 to be implemented.

## Patentansprüche

1. Computerimplementiertes Verfahren
zur Verwaltung von Informationen über ein Messgerät, angewendet auf ein aus mehreren Blockchains bestehendes Netzwerksystem, umfassend Datenübermittlungsknoten und Datenverwaltungsknoten, wobei die Datenübermittlungsknoten Netzwerkknoten einer ersten Blockchain und die Datenverwaltungsknoten Netzwerkknoten einer zweiten Blockchain sind; wobei die erste Blockchain eine von den Datenübermittlungsknoten gesendete Transaktion für den Zieldatenspeicher speichert, die Zustandsinformationen über das Messgerät umfasst; wobei das Verfahren von einem Netzwerkknoten der ersten Blockchain ausgeführt wird und die folgenden Schritte umfasst:
Empfangen einer blockchain-übergreifenden Verwaltungsanforderung von den Datenverwaltungsknoten bezüglich der in der ersten Blockchain gespeicherten Zustandsinformationen des Messgeräts; und
Überprüfen, als Reaktion auf die blockchain-übergreifende Verwaltungsanforderung, ob der Datenverwalter hinsichtlich der Zustandsinformationen des Messgeräts über eine Verwaltungsbefugnis verfügt; und
falls ja, Abrufen der Transaktion für den Zieldatenspeicher und Durchführen der Verwaltung der Zustandsinformationen des Messgeräts auf der Grundlage der Transaktion für den Zieldatenspeicher.

2. Verfahren nach Anspruch 1, wobei
die blockchain-übergreifende Verwaltungsanforderung eine Anforderung zum blockchain-übergreifenden Abrufen der Zustandsinformationen des Messgeräts ist; und das Durchführen der Verwaltung der Zustandsinformationen des Messgeräts Folgendes umfasst:
Übermitteln der Zustandsinformationen des Messgeräts an die Datenverwaltungsknoten über verschiedene Blockchains hinweg.

3. Verfahren nach Anspruch 1, wobei
die erste Blockchain mit einem Smart Contract zur Verwaltung der Gerätezustandsinformationen bereitgestellt wird und eine dem Vertragscode des Smart Contracts entsprechende Verarbeitungslogik eine Logik zur Überprüfung der Verwaltungsbefugnis umfasst; und
das Überprüfen, als Reaktion auf die blockchain-übergreifende Zugriffsanforderung, ob der Datenverwalter hinsichtlich der Zustandsinformationen des Messgeräts über eine Verwaltungsbefugnis verfügt, Folgendes umfasst:
Aufrufen der Logik zur Überprüfung der Verwaltungsbefugnis im Smart Contract als Reaktion auf die blockchain-übergreifende Zugriffsanforderung, um zu überprüfen, ob der Datenverwalter über die Verwaltungsbefugnis für die Zustandsinformationen des Messgeräts verfügt.

4. Verfahren nach Anspruch 3, wobei
die dem Vertragscode des Smart Contracts entsprechende Verarbeitungslogik ferner eine Verwaltungslogik für die Gerätezustandsinformationen umfasst; und
das Abrufen der Transaktion für den Zieldatenspeicher und das Durchführen der Verwaltung der Zustandsinformationen des Messgeräts auf der Grundlage der Transaktion für den Zieldatenspeicher Folgendes umfasst:
ferner Aufrufen der Verwaltungslogik im Smart Contract für die Gerätezustandsinformationen, nachdem überprüft wurde, dass der Datenverwalter hinsichtlich der Zustandsinformationen des Messgeräts über die Verwaltungsbefugnis verfügt, wobei die Transaktion für den Zieldatenspeicher abgerufen und die Verwaltung der Zustandsinformationen des Messgeräts auf der Grundlage der Transaktion für den Zieldatenspeicher durchgeführt wird.

5. Verfahren nach Anspruch 1, wobei
die erste Blockchain und die zweite Blockchain unterschiedliche Unterketten sind, die zu derselben Allianzkette gehören.

6. Verfahren nach Anspruch 1, wobei
das Empfangen einer blockchain-übergreifenden Zugriffsanforderung von den Datenverwaltungsknoten bezüglich der in der ersten Blockchain gespeicherten Zustandsinformationen des Messgeräts Folgendes umfasst:
Empfangen einer blockchain-übergreifenden Zugriffsanforderung von den Datenverwaltungsknoten über ein blockchain-übergreifendes Relaisgerät bezüglich der in der ersten Blockchain gespeicherten Zustandsinformationen des Messgeräts.

7. Verfahren nach einem der Ansprüche 1 bis 6, wobei
die Datenübermittlungsknoten eines oder mehrere der Folgenden umfassen:
einen Produktionserfassungsknoten des Messgeräts oder
einen Erstkalibrierungsknoten oder
ein Knotengerät einer Messauthentifizierungsstelle oder
ein Knotengerät einer Logistikstelle oder
ein Knotengerät eines Benutzers oder
ein Knotengerät des Betreibers;
die Transaktion für den Zieldatenspeicher umfasst einen eindeutigen Identifikationscode, der dem Messgerät entspricht; und die Gerätezustandsinformationen umfassen eines oder mehrere von Folgenden:
Rohstoffinformationen,
Produktionsprozessinformationen,
Informationen zur Erstkalibrierung,
Informationen zur Qualitätszertifizierung,
Informationen zum Logistikumlauf,
einen Gerätereplikationsparameter,
Informationen zu abnormalen Zuständen,
Informationen zu Messdatenaufzeichnungen,
Informationen zu Wartungsaufzeichnungen oder
Informationen zu elektronischen Verträgen
im Zusammenhang mit dem Messgerät.

8. Verfahren nach Anspruch 4, wobei
die Transaktion für den Zieldatenspeicher mindestens eines der Folgenden umfasst:
den aktuellsten elektronischen Plombierungscode des Messgeräts,
die aktuellsten Kalibrierinformationen über das Messgerät,
das dem Messgerät entsprechende aktuellste Softwareprogramm sowie die Versionsnummer des aktuellsten Softwareprogramms, wobei der Datenverwaltungsknoten das Messgerät ist,
erste Messergebnisinformationen des Messgeräts
erste Gerätebetriebsinformationen des Messgeräts;
die blockchain-übergreifende Verwaltungsanforderung mindestens eines der Folgenden umfasst:
einen vorhandenen Identifikationscode der Plombierung des Messgeräts,
vorhandene Kalibrierungsinformationen über das Messgerät,
die Versionsnummer eines aktuellen Softwareprogramms des Messgeräts,
zweite Messergebnisinformationen des Messgeräts,
zweite Gerätebetriebsinformationen des Messgeräts; und
die Verwaltungslogik für die durch die Verarbeitungslogik entsprechend dem Vertragscode des Smart Contracts gebildeten Gerätezustandsinformationen, die Folgendes umfasst:
Schritt A, Abrufen der Transaktion für den Zieldatenspeicher;
Schritt B, auf der Grundlage der Transaktion für den Zieldatenspeicher,
Bestimmen, ob der aktuellste Identifikationscode der Plombierung und der vorhandene Identifikationscode der Plombierung identisch sind oder Bestimmen, ob die aktuellsten Kalibrierungsinformationen und die vorhandenen Kalibrierungsinformationen identisch sind oder
Vergleichen, ob sich die Versionsnummer des aktuellsten Softwareprogramms und die Versionsnummer des aktuellen Softwareprogramms um eine voreingestellte Stufe unterscheiden oder
Bestimmen, ob die ersten Messergebnisinformationen und die zweiten Messergebnisinformationen identisch sind, oder
Bestimmen, ob die ersten Gerätebetriebsinformationen und die zweiten Gerätebetriebsinformationen identisch sind; und Schritt C, Senden,
falls sich der aktuelle Identifikationscode der Plombierung vom vorhandenen Identifikationscode der Plombierung unterscheidet, blockchain-übergreifendes Senden einer voreingestellten Aufforderung oder eines Alarms an die Datenverwaltungsknoten oder
falls sich die aktuellsten Kalibrierungsinformationen von den vorhandenen Kalibrierungsinformationen unterscheiden, blockchain-übergreifendes Senden der aktuellsten Kalibrierungsinformationen an die Datenverwaltungsknoten, sodass die Datenverwaltungsknoten das Messgerät auf der Grundlage der aktuellsten Kalibrierungsinformationen kalibrieren können oder
falls sich die Versionsnummern um eine voreingestellte Stufe unterscheiden, blockchain-übergreifendes Senden des aktuellsten Softwareprogramms an das Messgerät, sodass das Messgerät eine Aktualisierung der Softwareversion durchführt, oder
falls sich die ersten Messergebnisinformationen von den zweiten Messergebnisinformationen unterscheiden, blockchain-übergreifendes Übermitteln der ersten Messergebnisinformationen oder einer voreingestellten Aufforderung oder eines Alarmvorgangs an die Datenverwaltungsknoten oder falls sich die ersten Gerätebetriebsinformationen von den zweiten Gerätebetriebsinformationen unterscheiden, blockchain-übergreifendes Senden der ersten Gerätebetriebsinformationen oder einer voreingestellten Aufforderung oder eines Alarmauslösevorgangs an die Datenverwaltungsknoten.

9. Eine Computervorrichtung, umfassend einen Speicher und einen Prozessor, wobei auf dem Speicher ein vom Prozessor ausführbares Computerprogramm gespeichert ist, das bei Ausführung durch den Prozessor die Durchführung des Verfahrens nach einem der Ansprüche 1 bis 8 bewirkt.

10. Computerlesbares Speichermedium, auf dem ein Computerprogramm gespeichert ist, wobei das Computerprogramm bei Ausführung durch einen Prozessor die Durchführung der Schritte des Verfahrens nach einem der Ansprüche 1 bis 8 bewirkt.

## Revendications

1. Procédé mis en œuvre par ordinateur
pour gérer des informations concernant un dispositif de mesure, appliqué à un système de réseau incluant une pluralité de chaînes de blocs, le système de réseau comprenant des dispositifs nœuds émetteurs de données et des dispositifs nœuds gestionnaires de données, dans lequel les dispositifs nœuds émetteurs de données sont des dispositifs nœuds pour une première chaîne de blocs, et les dispositifs nœuds gestionnaires de données sont des dispositifs nœuds pour une seconde chaîne de blocs ; la première chaîne de blocs stockant une transaction de dépôt cible, envoyée par les dispositifs nœuds émetteurs de données, comprenant des informations d'état de dispositif concernant le dispositif de mesure ; le procédé étant exécuté par un dispositif nœud de la première chaîne de blocs, et comprenant les étapes consistant à :
recevoir une demande de gestion inter-chaînes à partir des dispositifs nœuds gestionnaires de données pour les informations d'état de dispositif concernant le dispositif de mesure stockées dans la première chaîne de blocs ; et
vérifier, en réponse à la demande de gestion inter-chaînes, si le gestionnaire de données a une autorité de gestion sur les informations d'état de dispositif concernant le dispositif de mesure ; et
si oui, obtenir la transaction de dépôt cible, et réaliser la gestion des informations d'état de dispositif concernant le dispositif de mesure sur la base de la transaction de dépôt cible.

2. Procédé selon la revendication 1, dans lequel
la demande de gestion inter-chaînes est une demande pour obtenir les informations d'état de dispositif concernant le dispositif de mesure dans les chaînes ; et
ladite réalisation de la gestion des informations d'état de dispositif concernant le dispositif de mesure comprend :
l'envoi des informations d'état de dispositif concernant le dispositif de mesure aux dispositifs nœuds gestionnaires de données dans les chaînes.

3. Procédé selon la revendication 1, dans lequel
la première chaîne de blocs est déployée avec un contrat intelligent pour gérer les informations d'état de dispositif, et une logique de traitement correspondant au code de contrat du contrat intelligent comprend une logique de vérification d'autorité de gestion ; et
ladite vérification, en réponse à la demande d'accès inter-chaînes, si le gestionnaire de données a une autorité de gestion sur les informations d'état de dispositif concernant le dispositif de mesure comprend :
l'appel, en réponse à la demande d'accès inter-chaînes, de la logique de vérification d'autorité de gestion dans le contrat intelligent pour vérifier si le gestionnaire de données a l'autorité de gestion sur les informations d'état de dispositif concernant le dispositif de mesure.

4. Procédé selon la revendication 3, dans lequel
la logique de traitement correspondant au code de contrat du contrat intelligent comprend en outre une logique de gestion pour les informations d'état de dispositif ; et ladite obtention de la transaction de dépôt cible et ladite réalisation de la gestion des informations d'état de dispositif concernant le dispositif de mesure sur la base de la transaction de dépôt cible comprennent :
l'appel supplémentaire, après avoir vérifié que le gestionnaire de données a l'autorité de gestion sur les informations d'état de dispositif concernant le dispositif de mesure, de la logique de gestion dans le contrat intelligent pour les informations d'état de dispositif, l'obtention de la transaction de dépôt cible, et la réalisation de la gestion des informations d'état de dispositif concernant le dispositif de mesure sur la base de la transaction de dépôt cible.

5. Procédé selon la revendication 1, dans lequel
la première chaîne de blocs et la seconde chaîne de blocs sont des sous-chaînes différentes appartenant à la même chaîne d'alliance.

6. Procédé selon la revendication 1, dans lequel
ladite réception d'une demande d'accès inter-chaînes à partir des dispositifs nœuds gestionnaires de données pour les informations d'état de dispositif concernant le dispositif de mesure stockées dans la première chaîne de blocs comprend :
la réception, via un dispositif relais inter-chaînes, d'une demande d'accès inter-chaînes à partir des dispositifs nœuds gestionnaires de données pour les informations d'état de dispositif concernant le dispositif de mesure stockées dans la première chaîne de blocs.

7. Procédé selon l'une quelconque des revendications 1 à 6, dans lequel
les dispositifs nœuds émetteurs de données comprennent un ou plusieurs parmi
un dispositif nœud d'enregistrement de production du dispositif de mesure, ou
un dispositif nœud d'étalonnage initial, ou
un dispositif nœud institut d'authentification de mesure, ou
un dispositif nœud agence de logistique, ou
un dispositif nœud utilisateur, ou
un dispositif nœud mainteneur ;
la transaction de dépôt cible comprend un code d'identification unique correspondant au dispositif de mesure ; et les informations d'état de dispositif comprennent un ou plusieurs parmi
des informations de matières premières,
des informations de processus de production,
des informations d'étalonnage initial,
des informations de certification de qualité,
des informations de circulation logistique,
un paramètre de réplication de dispositif,
des informations d'état anormal,
des informations de registre de données de mesure,
des informations de registre de maintenance, ou
des informations de contrat électronique
liés au dispositif de mesure.

8. Procédé selon la revendication 4, dans lequel
la transaction de dépôt cible comprend au moins un de ce qui suit :
le dernier code de plombage électronique du dispositif de mesure,
les dernières informations d'étalonnage concernant le dispositif de mesure,
le dernier programme logiciel correspondant au dispositif de mesure et le numéro de version du dernier programme logiciel, dans lequel le dispositif nœud gestionnaire de données est le dispositif de mesure,
des premières informations de résultat de mesure concernant le dispositif de mesure,
des premières informations de fonctionnement de dispositif concernant le dispositif de mesure ;
la demande de gestion inter-chaînes comprend au moins un de ce qui suit :
un code d'identification de plombage existant du dispositif de mesure,
des informations d'étalonnage existantes concernant le dispositif de mesure,
le numéro de version d'un programme logiciel courant du dispositif de mesure,
des secondes informations de résultat de mesure concernant le dispositif de mesure,
des secondes informations de fonctionnement de dispositif concernant le dispositif de mesure ; et
la logique de gestion pour les informations d'état de dispositif comprises dans la logique de traitement correspondant au code de contrat du contrat intelligent comprend :
étape A, l'obtention de la transaction de dépôt cible ;
étape B, sur la base de la transaction de dépôt cible,
la détermination si le dernier code d'identification de plombage et le code d'identification de plombage existant sont identiques, ou
la détermination si les dernières informations d'étalonnage et les informations d'étalonnage existantes sont identiques, ou
la comparaison si le numéro de version du dernier programme logiciel et le numéro de version du programme logiciel courant diffèrent d'un niveau prédéfini, ou
la détermination si les premières informations de résultat de mesure et les secondes informations de résultat de mesure sont identiques, ou
la détermination si les premières informations de fonctionnement de dispositif et les secondes informations de fonctionnement de dispositif sont identiques ; et
étape C, l'envoi,
si le dernier code d'identification de plombage est différent du code d'identification de plombage existant, d'une invite ou d'une opération d'alarme prédéfinies aux dispositifs nœuds gestionnaires de données dans les chaînes, ou si les dernières informations d'étalonnage sont différentes des informations d'étalonnage existantes, des dernières informations d'étalonnage aux dispositifs nœuds gestionnaires de données dans les chaînes, de sorte que les dispositifs nœuds gestionnaires de données puissent étalonner le dispositif de mesure sur la base des dernières informations d'étalonnage, ou
si les numéros de version diffèrent d'un niveau prédéfini, du dernier programme logiciel au dispositif de mesure dans les chaînes, de sorte que le dispositif de mesure réalise la mise à niveau de la version logicielle, ou
si les premières informations de résultat de mesure sont différentes des secondes informations de résultat de mesure, des premières informations de résultat de mesure ou d'une invite ou d'une opération d'alarme prédéfinies aux dispositifs nœuds gestionnaires de données dans les chaînes, ou
si les premières informations de fonctionnement de dispositif sont différentes des secondes informations de fonctionnement de dispositif, des premières informations de fonctionnement de dispositif ou d'une invite ou d'une opération d'alarme prédéfinies aux dispositifs nœuds gestionnaires de données dans les chaînes.

9. Dispositif informatique, comprenant : une mémoire et un processeur, dans lequel dans la mémoire est stocké un programme informatique exécutable par le processeur provoquant, lorsqu'il est exécuté par le processeur, la mise en œuvre du procédé selon l'une quelconque des revendications 1 à 8.

10. Support de stockage lisible par ordinateur sur lequel est stocké un programme informatique, dans lequel le programme informatique, lorsqu'il est exécuté par un processeur, provoque la mise en œuvre des étapes du procédé selon l'une quelconque des revendications 1 à 8.
